# EUROPEAN PATENT SPECIFICATION

(11) **EP 3 776 437 B1**
(45) Date of publication and mention of the grant of the patent: **20.09.2023**
(21) Application number: 19752775.7
(22) Date of filing: 26.07.2019
(51) Int. Cl.: G06Q 30/06

(54) **BLOCKCHAIN-BASED ASSET TRANSFER METHOD AND APPARATUS, AND ELECTRONIC DEVICE**
VERFAHREN UND VORRICHTUNG ZUR BLOCKCHAIN-BASIERTEN ÜBERTRAGUNG VON VERMÖGENSWERTEN UND ELEKTRONISCHE VORRICHTUNG
PROCÉDÉ ET APPAREIL DE TRANSFERT D'ACTIFS À BASE DE CHAÎNE DE BLOCS ET DISPOSITIF ÉLECTRONIQUE

(30) Priority: 27.07.2018 CN 201810845039
(43) Date of publication of application: 17.02.2021
(73) Proprietor: Advanced New Technologies Co., Ltd., George Town, Grand Cayman KY1-9008 (KY)
(72) Inventor: LI, Lichun, Hangzhou, Zhejiang, 310000 (CN); LIU, Zheng, Hangzhou, Zhejiang, 310000 (CN); YIN, Shan, Hangzhou, Zhejiang, 310000 (CN); ZHANG, Wenbin, Hangzhou, Zhejiang, 310000 (CN); MA, Baoli, Hangzhou, Zhejiang, 310000 (CN)
(74) Representative: Fish & Richardson P.C.
(86) International application number: PCT/US2019/043613
(87) International publication number: WO 2020/023850

(56) References cited:
- ELI BEN SASSON ET AL: "Zerocash: Decentralized Anonymous Payments from Bitcoin", 2014 IEEE SYMPOSIUM ON SECURITY AND PRIVACY, 1 May 2014 (2014-05-01), pages 459-474, XP055538553, DOI: 10.1109/SP.2014.36 ISBN: 978-1-4799-4686-0
- RIAD S WAHBY ET AL: "Doubly-efficient zkSNARKs without trusted setup", IACR, INTERNATIONAL ASSOCIATION FOR CRYPTOLOGIC RESEARCH , vol. 20180419:162303 19 April 2018 (2018-04-19), pages 1-29, XP061026764, Retrieved from the Internet: URL:http://eprint.iacr.org/2017/1132.pdf [retrieved on 2018-04-19]
- Andrew Poelstra ET AL: "Confidential Assets", Bitcoin'17, 3 April 2017 (2017-04-03), XP055699682, DOI: 10.1007/978-3-662-58820-8_4 Retrieved from the Internet: URL:https://web.archive.org/web/2017040320 3022if_/https://blockstream.com/bitcoin17- final41.pdf [retrieved on 2020-05-29]

## Description

### TECHNICAL FIELD

One or more implementations of the present specification relate to the field of blockchain technologies, and in particular, to a blockchain-based asset transfer method and apparatus, and an electronic device.

### BACKGROUND

Blockchain technology, also referred to as distributed ledger technology, is an emerging technology in which several computing devices jointly participate in "accounting" and jointly maintain a complete distributed database. Because the blockchain technology is characterized by decentralization and transparency, each computing device can participate in database recording, and computing devices can implement rapid data synchronization, the blockchain technology is widely used in many fields.

Document "Confidential Assets" (Andrew Poelstra et al, Bitcoin'17, 3 April 2017, XP055699682, DOI: 10.1007/978-3-662-58820-8_4) describes, in the framework of Bitcoin transactions, a scheme, "confidential transactions", which blinds the amounts of all unspent transaction outputs, while preserving public verifiability that no transaction creates or destroys coins. This removes a significant amount of information from the transaction graph, improving privacy and fungibility without a trusted setup or exotic cryptographic assumptions. This document further extends this scheme to "confidential assets", a scheme in which a single blockchain-based ledger may track multiple asset types. Confidential transactions are extended to blind not only output amounts, but also their asset type, improving the privacy and fungibility of all assets.

### SUMMARY

The invention is defined by the appended claims. The present specification provides a blockchain-based asset transfer method, applied to a node device in the blockchain, including: receiving an asset transfer transaction sent by an asset transferor, where the asset transfer transaction includes a commitment value that is generated through calculation by inputting at least an asset type of an output asset object in the asset transfer transaction as input data to a commitment function, and a proof used to perform a zero-knowledge proof on the commitment value; performing the zero-knowledge proof on the commitment value based on the proof, to verify whether an asset type of an input asset object is the same as the asset type of the output asset object in the asset transfer transaction; and if yes, publishing the commitment value corresponding to the output asset object on the blockchain for deposit.

The present specification further provides a blockchain-based asset transfer apparatus, applied to a node device in the blockchain, including: a receiving module, configured to receive an asset transfer transaction sent by an asset transferor, where the asset transfer transaction includes a commitment value that is generated through calculation by inputting at least an asset type of an output asset object in the asset transfer transaction as input data to a commitment function, and a proof used to perform a zero-knowledge proof on the commitment value; a verification module, configured to perform the zero-knowledge proof on the commitment value based on the proof, to verify whether an asset type of an input asset object is the same as the asset type of the output asset object in the asset transfer transaction; and a deposit module, configured to publish the commitment value corresponding to the output asset object on the blockchain for deposit if the asset type of the input asset object is the same as the asset type of the output asset object in the asset transfer transaction.

The present specification further provides an electronic device, including: a processor and a storage device that is configured to store an instruction that can be executed by a machine, where the processor reads and executes the machine executable instruction that is stored in the storage device and that corresponds to a blockchain-based asset transfer control logic, to receive an asset transfer transaction sent by an asset transferor, where the asset transfer transaction includes a commitment value that is generated through calculation by inputting at least an asset type of an output asset object in the asset transfer transaction as input data to a commitment function, and a proof used to perform a zero-knowledge proof on the commitment value; perform the zero-knowledge proof on the commitment value based on the proof, to verify whether an asset type of an input asset object is the same as the asset type of the output asset object in the asset transfer transaction; and if yes, publish the commitment value corresponding to the output asset object on the blockchain for deposit.

According to the previous implementations, on the one hand, because the asset transfer transaction includes only the commitment value that is generated through calculation by inputting at least the asset type of the output asset object in the asset transfer transaction as input data to the commitment function, and the asset type of the output asset object is not included in the asset transfer transaction in the form of plain text, the blockchain can hide the asset type of an asset object transferred out by the asset transferor, and privacy of the asset transferor can be protected.

On the other hand, because the asset transfer transaction further includes the proof used to perform the zero-knowledge proof on the commitment value, the node device in the blockchain can perform the zero-knowledge proof on the commitment value based on the proof on the premise that the asset type of the asset object transferred out by the asset transferor is hidden, to verify whether the asset type of the input asset object is the same as the asset type of the output asset object in the asset transfer transaction.

### BRIEF DESCRIPTION OF DRAWINGS

FIG. 1 is a flowchart illustrating a blockchain-based asset transfer method, according to an example implementation;
FIG. 2 is a schematic structural diagram illustrating an electronic device, according to an example implementation; and
FIG. 3 is a block diagram illustrating a blockchain-based asset transfer apparatus, according to an example implementation.

### DESCRIPTION OF IMPLEMENTATIONS

Zero-knowledge proof is a cryptology technology. By using the present technology, a prover can enable one or more verifiers to believe that a certain assertion is correct without providing any sensitive information to the verifiers.

The present specification is intended to disclose a technical solution in which a zero-knowledge proof algorithm is combined with an asset publishing mechanism of blockchain so that a node device in the blockchain can normally verify whether the asset type of an input asset object is the same as the asset type of an output asset object in an asset transfer transaction on the premise that the type of an asset transferred out by an asset transferor is hidden.

During implementation, when transferring a held asset object in the blockchain, an unspent transaction output (UTXO) model is used. An asset transfer transaction is published on the blockchain to trigger destroying an asset object held by an asset transferor and recreating a new asset object for an asset transferee, so as to complete a transfer of the asset object between different holders.

The input asset object in the asset transfer transaction is the asset object held by the asset transferor, and the output asset object in the asset transfer transaction is the asset object that needs to be re-created for the asset transferee.

When the asset transferor needs to transfer the held asset object in the blockchain, the asset transferor can input the output asset object as input data (where the input data can include other types of information that needs to be hidden, for example, a public key of an asset receiver) to a commitment function for calculation to obtain a commitment value, and can generate, based on the zero-knowledge proof algorithm included in the blockchain, a proof (proof) used to perform a zero-knowledge proof on the commitment value. Then, the asset transferor can construct the asset transfer transaction based on the previous commitment value and the proof, and send the asset transfer transaction in the blockchain, to complete an asset object transfer.

When receiving the asset transfer transaction, the node device in the blockchain can obtain the previous commitment value and the proof that are included in the asset transfer transaction, and then perform the zero-knowledge proof on the commitment value based on the previous proof by using the previous zero-knowledge proof algorithm, to verify whether the asset type of the input asset object is the same as the asset type of the output asset object in the asset transfer transaction.

If it is determined, through verification, that the asset type of the input asset object is the same as the asset type of the output asset object in the asset transfer transaction, the commitment value corresponding to the output asset object is published on the blockchain for deposit, to complete transfer of the asset object between different holders.

In the previous technical solution, on the one hand, because the asset transfer transaction includes only the commitment value that is generated through calculation by inputting at least the asset type of the output asset object in the asset transfer transaction as input data to the commitment function, and the asset type of the output asset object is not included in the asset transfer transaction in the form of plain text, the blockchain can hide the asset type of an asset object transferred out by the asset transferor, and privacy of the asset transferor can be protected.

On the other hand, because the asset transfer transaction further includes the proof used to perform the zero-knowledge proof on the commitment value, the node device in the blockchain can perform the zero-knowledge proof on the commitment value based on the proof on the premise that the asset type of the asset object transferred out by the asset transferor is hidden, to verify whether the asset type of the input asset object is the same as the asset type of the output asset object in the asset transfer transaction.

The following describes the present specification by using specific implementations with reference to specific application scenarios.

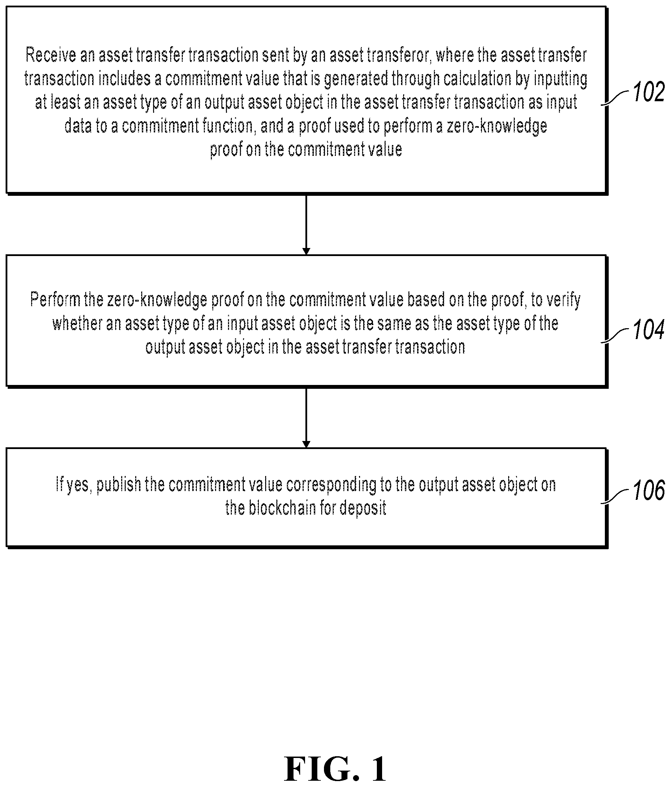

Referring to FIG. 1, FIG. 1 shows a blockchain-based asset transfer method, according to an implementation of the present specification. The method is applied to a node device in a blockchain, and includes the following steps:

Step 102: Receive an asset transfer transaction sent by an asset transferor, where the asset transfer transaction includes a commitment value that is generated through calculation by inputting at least an asset type of an output asset object in the asset transfer transaction as input data to a commitment function, and a proof used to perform a zero-knowledge proof on the commitment value.

Step 104: Perform the zero-knowledge proof on the commitment value based on the proof, to verify whether an asset type of an input asset object is the same as the asset type of the output asset object in the asset transfer transaction.

Step 106: If yes, publish the commitment value corresponding to the output asset object on the blockchain for deposit.

The blockchain described in the present specification can include any type of blockchain network whose supported objects include the asset objects.

For example, in a conventional blockchain, the supported objects usually include only an account object and a contract object. In the present specification, the objects supported by the blockchain can be extended, and the asset objects are further included in addition to the account object and the contract object that are currently supported by the blockchain.

It is worthwhile to note that the type of the blockchain described in the present specification is not limited. The blockchain can be a consortium blockchain, or can be other types of blockchains (e.g., a private chain or a public chain) other than the consortium blockchain.

The contract object can include a smart contract program that is published on the blockchain by a target member in the blockchain, recorded in a distributed database (a blockchain ledger) of the blockchain, and used to manage the asset objects supported by the blockchain. A user accessing the blockchain can create an asset object in the blockchain and complete online management of the held asset object in the blockchain by invoking the contract object.

For example, the blockchain can be a consortium blockchain including several financial institutions as consortium members. In this case, the target member in the blockchain can be a financial institution, namely, a consortium member, in the consortium blockchain that has an asset object creation right. A distributed smart contract platform can be established by using the consortium blockchain. An operator of the smart contract platform can extend object types supported by the smart contract platform, and further supports an asset object in addition to an account object and a contract object that are currently supported, so that a financial institution, namely, a consortium member, can create a newly added asset type on the platform by publishing a smart contract (a contract object) on the blockchain, and then a user accessing the blockchain can create an asset object and complete online management of the held asset object in the blockchain by invoking the smart contract.

The asset object can include a smart asset object. The smart asset object is used to maintain a smart asset. The smart asset corresponds to any type of real asset of the user in the real world, and the smart asset object enables the smart asset to be processed in the blockchain. For example, the smart asset is particularly suitable for processing the smart asset object by using the smart contract in the blockchain. The smart asset corresponds to a type of a real asset of the user in the real world, and is not limited in the present specification.

For example, the blockchain is a consortium blockchain including several financial institutions. In actual applications, a financial institution that manages node devices in the consortium blockchain can package any form of offline assets of the user such as funds, real estate, stocks, loan contracts, bills, and accounts receivable into digital assets, and create and publish the digital assets in a distributed database of the consortium blockchain.

The transaction described in the present specification is data that is created by a user by using client software of the blockchain and that needs to be finally published to the distributed database of the blockchain.

The transaction in the blockchain includes a narrow-sense transaction and a broad-sense transaction. The narrow-sense transaction is a value transfer published by the user on the blockchain. For example, in a conventional bitcoin blockchain network, the transaction can be a transfer initiated by the user in the blockchain. The broad-sense transaction is service data that is published by the user on the blockchain and that has a service purpose. For example, an operator can establish a consortium blockchain based on an actual service demand, and deploy some other types of online services (e.g., a virtual asset service, a renting service, a vehicle scheduling service, an insurance claim service, a credit service, and a medical service) irrelevant to a value transfer based on the consortium blockchain. In such a consortium blockchain, the transaction can be a service message or a service request that is published by the user on the consortium blockchain and that has a service purpose.

It is worthwhile to note that the consensus algorithm included in the blockchain is not limited in the present specification. In actual applications, the consensus algorithm can be one of Byzantine fault tolerance algorithms, or one of non-Byzantine fault tolerance algorithms.

The Byzantine fault tolerance algorithm is a distributed fault tolerance algorithm such as a pbft algorithm in which a Byzantine node (an evil node) needs to be considered in a distributed network including several node devices. If the Byzantine fault tolerance algorithm is used to perform consensus in the blockchain network, it can be considered that both evil node and faulty node exist in the blockchain. Correspondingly, the non-Byzantine fault tolerance algorithm is a distributed fault tolerance algorithm such as a raft algorithm in which a Byzantine node is not considered in a distributed network including several node devices. If the non-Byzantine fault tolerance algorithm is used to perform consensus in the blockchain network, it can be considered that no evil node exists but faulty node exists in the blockchain.

In an implementation, the blockchain can be a consortium blockchain that includes several trusted financial institutions as consortium members. A financial institution that has an asset object publishing right in the consortium blockchain can create a newly added asset type on a platform by publishing a smart contract (a contract object) on the consortium blockchain, and can publish the newly added asset type on the consortium blockchain.

A specific process in which the financial institution publishes the smart contract on the consortium blockchain is not described in detail in the present specification. A person skilled in the art can make references to records in related technologies.

For example, in actual applications, the financial institution can publish a created smart contract on the consortium blockchain in the form of a transaction by using a held private key. When receiving, by using a managed node device, a transaction published by another financial institution, each consortium member in the consortium blockchain can perform consensus on transactions recently published on the consortium blockchain based on a consensus algorithm of the consortium blockchain, and after completing the consensus, record the smart contract, published by using the transaction, into the distributed database of the consortium blockchain.

An execution program used to create an asset object can be stated in advance in the smart contract that is published by the financial institution on the consortium blockchain and that corresponds to the newly added asset type. The financial institution can serve as an asset publisher, create one or more asset objects online by invoking the execution program stated in the smart contract, and then issue the created asset objects to a specific asset holder for possession.

The asset holder can serve as an asset transferor, construct an asset transfer transaction, and send the asset transfer transaction to the blockchain, to transfer a held asset object to other holders for possession.

An input asset object in the asset transfer transaction is an asset object held by an asset transferor, and an output asset object in the asset transfer transaction is an asset object that needs to be re-created for an asset transferee. It is worthwhile to note that in actual applications, in some digital asset systems that are established based on the blockchain, only some trusted asset publishers are allowed to publish one or more specific types of asset objects.

For example, in a blockchain-based foreign exchange system, digital assets that can be published on the blockchain may include a plurality of types of foreign exchange assets. Some high-reputation financial institutions can serve as asset publishers, and may be allowed to publish only one or more specific types of foreign exchange assets on the blockchain to provide liquidity. For example, a Hong Kong branch of a certain bank serves as an asset publisher, and may be allowed to publish only onshore Hong Kong dollar assets and onshore US dollar assets in Hong Kong in the foreign exchange system.

In addition, for the purpose of privacy protection, when performing an asset transfer, the asset transferor may further need to hide an asset type of a transferred asset object and other forms of privacy data related to the transferred asset object.

For example, in addition to hiding the asset type of a transferred target asset object, the asset quantity of the transferred target asset object and the identity of the asset transferor may need to be hidden.

Based on this, in the present specification, when transferring a held asset object in the blockchain, an asset transferor can no longer directly add privacy data such as the asset type of the transferred asset object to a constructed asset transfer transaction. The asset transferor can serve as a prover of a zero-knowledge proof, input at least the asset type of an output asset object as input data to a commitment function for calculation to obtain a commitment value, generate, by using a zero-knowledge proof algorithm included in the blockchain, a proof that is used to perform the zero-knowledge proof on the commitment value, and add the generated commitment value and proof to the constructed asset transfer transaction for sending in the blockchain, to complete an asset object transfer.

### (1). Generation of the commitment value

The commitment function is a unidirectional function that is commonly used in the fields of cryptology, security, and privacy protection and that is used to commit to raw data without leaking the raw data. An output value of the commitment function is referred to as a commitment value (or a commitment for short). Based on characteristics of the unidirectional function, after the raw data is input to the commitment function for calculation to obtain the commitment value, the raw data cannot be restored from the commitment value through reverse calculation. In addition, there are no two pieces of different raw data with equal commitment values.

For example, in an implementation, the commitment function can be a hash function. In this case, the commitment value can be a hash value obtained through calculation by inputting at least the asset type of the target asset object that needs to be published as input data to the hash function.

It is worthwhile to note that in the present specification, specific content of input data, used to calculate the commitment value based on the commitment function, generally depends on content that needs to be hidden during transferring of the asset object.

In actual applications, in addition to the asset type of the transferred asset object that needs to be hidden, input data of the commitment function can further include the asset quantity of the transferred asset object, a public key of a receiver (the receiver can be an asset transferor, or can be a third party) of the transferred asset object, and can further include a generated random number. Details are omitted in the present specification.

### (2). Generation of the proof

In the present specification, the algorithm type of the proof algorithm included in the blockchain is not limited in the present specification.

For example, in an implementation, the blockchain can include a common zero-knowledge proof algorithm such as the zksnark algorithm or the zkstark algorithm. For example, during implementation, execution code related to an algorithm logic of the zero-knowledge proof algorithm such as the zksnark algorithm or the zkstark algorithm can be implanted into a smart contract and published on the blockchain. Then, the smart contract can be subsequently invoked to execute the execution code that is related to the algorithm logic of the zero-knowledge proof algorithm and that is implanted in the smart contract, to complete a zero-knowledge proof process such as generation of a proof and zero-knowledge verification of the proof.

A zero-knowledge algorithm included in the blockchain can generally include a key generation algorithm, a proof generation algorithm, and a proof verification algorithm. The key generation algorithm is responsible for calculating and generating a proving key (which can be used as input data for generating a proof) and a verification key (which can be used as input data for verifying the proof). The proof generation algorithm is responsible for generating the proof. The proof verification algorithm is responsible for verifying the proof, to obtain a true or false verification result.

Taking the zksnark algorithm as an example, the zksnark algorithm includes three algorithms: a G algorithm, a P algorithm, and a V algorithm. The G algorithm is a key generator, and is responsible for generating a proving key and a verification key. The P algorithm is responsible for generating a proof. The V algorithm is responsible for verifying the proof generated by using the P algorithm, to obtain a true or false verification result.

It is worthwhile to note that the specific content of input data, used by an asset transferor to calculate a proof based on a proof generation algorithm included in the blockchain, usually depends on the assertion that a zero-knowledge proof finally needs to be performed on.

In the present specification, the assertion that the zero-knowledge proof finally needs to be performed on can include the following: whether an asset type of an input asset object is the same as the asset type of the output asset object in the asset transfer transaction.

Specific content of the assertion that the zero-knowledge proof finally needs to be performed on generally depends on specific demands of a user. In actual applications, the assertion that the zero-knowledge proof finally needs to be performed on can also include assertions other than the previously described assertion. Details are omitted in the present specification.

For example, the assertion that the zero-knowledge proof finally needs to be performed on can include the following: whether an asset quantity of the input asset object is the same as an asset quantity of the output asset object in the asset transfer transaction.

In this case, based on the assertion that the zero-knowledge proof needs to be performed on, the specific content of the input data, used by the asset transferor to calculate the proof based on the proof generation algorithm, needs to include at least a commitment value that is obtained through calculation by using a commitment function, the asset type of the input asset object, and the asset type of the output asset object.

In other words, the asset transferor needs to input at least the commitment value, the asset type of the input asset object, and the asset type of the output asset object to the proof generation algorithm for calculation, to generate the proof that is used to perform the zero-knowledge proof on the commitment value.

It is worthwhile to note that an asset object transfer indicates that an asset object that is published and deposited in the blockchain and that is held by an asset transferor is transferred to another asset holder for possession.

Therefore, during the zero-knowledge proof, in addition to the need of verifying whether the asset type of the input asset object is the same as the asset type of the output asset object in the asset transfer transaction, whether the input asset object corresponds to an asset object that is published and deposited in the blockchain also needs to be verified.

In other words, a transfer operation of the present transaction object can be normally performed only when the input asset object in the asset transfer transaction is an existing asset object that is deposited in the blockchain. Otherwise, the present asset transfer can be considered as an illegal asset transfer (to be specific, a non-existent asset is transferred to another holder).

Based on this, in the present specification, the assertion that the zero-knowledge proof finally needs to be performed on can include the following: whether a commitment value of the input asset object corresponds to an asset object that is deposited in the blockchain, and whether the asset type of the input asset object is the same as the asset type of the output asset object in the asset transfer transaction.

In this case, based on the assertion that the zero-knowledge proof needs to be performed on, the specific content of the input data, used by the asset transferor to calculate the proof based on the proof generation algorithm, further needs to include the commitment value of the input asset object, in addition to the commitment value that is obtained through calculation by using the commitment function, the asset type of the input asset object, and the asset type of the output asset object.

It is worthwhile to note that when the asset transferor publishes the target asset object on the blockchain, besides that the asset type of the published target asset object can be hidden in a transaction, in actual applications, related information of the input asset object can be selectively hidden in the blockchain (in other words, a transferred-out asset object is hidden).

In this case, if the blockchain supports hiding the related information of the input asset object, the specific content of the input data, used by the asset transferor to calculate the proof based on the proof generation algorithm, can include the commitment value obtained through calculation by using the commitment function, the asset type of the input asset object, the asset type of the output asset object, and identifier information corresponding to the commitment value of the input asset object.

In other words, in this case, the asset transferor needs to input at least the commitment value, the asset type of the input asset object, the asset type of the output asset object, and the commitment value of the input asset object or the identifier information corresponding to the commitment value of the input asset object to the proof generation algorithm for calculation, to generate the proof that is used to perform the zero-knowledge proof on the commitment value.

The identifier information is used to uniquely identify the commitment value of an input asset object. To hide information about the input asset object, a correspondence between the commitment value of the input asset object and the identifier information of the commitment value can be maintained only by the holder of the input asset object.

For example, in an implementation, the identifier information can be a number of the commitment value, and a correspondence between the commitment value and the number of the commitment value can be maintained only by the holder of the input asset object. Then, the number of the commitment value is submitted to the blockchain and published. In this case, only the holder of the input asset object can learn the commitment value corresponding to the number. Other asset holders can only learn that the number corresponds to an existing asset object in the blockchain, but cannot learn specific information of the asset object, so that the input asset object can be hidden.

If the blockchain does not support hiding the related information of the input asset object, the specific content of the input data, used by the asset transferor to calculate the proof based on the proof generation algorithm, can include the commitment value obtained through calculation by using the commitment function, the asset type of the input asset object, the asset type of the output asset object, and an original commitment value of the input asset obj ect.

In the following implementations, description is performed by using an example in which the blockchain supports hiding the related information of the input asset object.

### (3). Zero-knowledge verification on the commitment value

When receiving the asset transfer transaction sent by the asset transferor, a node device (a node device participating in the consensus) in the blockchain can obtain information such as the proof and the commitment value that are included in the asset transfer transaction, and initiate the zero-knowledge proof on the commitment value based on the proof, to determine whether the identifier information of the commitment value of the input asset object corresponds to a commitment value of an asset object deposited in the blockchain, and whether the asset type of the input asset object is the same as the asset type of the output asset object in the asset transfer transaction.

As a verifier of the zero-knowledge proof, the node device can input the proof and the commitment value as input data of a zero-knowledge verification algorithm to a proof verification algorithm for calculation, and then determine, based on an output result of the proof verification algorithm, whether the identifier information corresponds to the commitment value of an asset object deposited in the blockchain (whether the identifier information corresponds to the commitment value of an asset object in the blockchain can be learned, but the specific asset object whose commitment value corresponds to the identifier information cannot be learned), and whether the asset type of the input asset object is the same as the asset type of the output asset object in the asset transfer transaction.

Taking the zksnark algorithm as an example, when performing zero-knowledge verification on the proof, the proof and the commitment value can be input to a V algorithm in the zksnark algorithm as input data for calculation. If the output result of the V algorithm is true, it indicates that the assertion that the zero-knowledge proof needs to be performed on is true. In this case, the identifier information corresponds to the commitment value of an asset object deposited in the blockchain, and the asset type of the input asset object is the same as the asset type of the output asset object in the asset transfer transaction. If the output result of the V algorithm is false, it indicates that the assertion that the zero-knowledge proof needs to be performed on is false. In this case, the identifier information corresponding to the commitment value of the input asset object does not correspond to the commitment value of an asset object deposited in the blockchain (the input asset object may be a non-existent asset object), or the asset type of the input asset object is different from the asset type of the output asset object in the asset transfer transaction.

It is worthwhile to note that the specific algorithm logic of inputting the proof and the commitment value as input data to the proof verification algorithm to perform the zero-knowledge proof is not described in detail in the present specification. When a person skilled in the art implements the technical solution in the present specification, references can be made to records in related technologies.

### (4). Publishing and depositing the commitment value

In the present specification, when the node device determines, by using the zero-knowledge proof, that the identifier information corresponds to the commitment value of an asset object deposited in the blockchain, and the asset type of the input asset object is the same as the asset type of the output asset object in the asset transfer transaction, the asset transfer transaction is a legal transaction.

On the one hand, the commitment value that is included in the asset transfer transaction and that corresponds to the output asset object can be published on the blockchain for deposit. For example, the node device can record the commitment value in the distributed database of the blockchain.

On the other hand, because the input asset object is an asset object already held by the asset transferor, and the commitment value corresponding to the asset object is deposited in the blockchain, "anonymous destruction" is performed on the asset object. The node device can also publish the identifier information corresponding to the commitment value of the input asset object on the blockchain for deposit, to indicate that the input asset object indicated by the identifier information is transferred to another asset holder for possession.

Because the correspondence between the identifier information and the commitment value of the input asset object is only held by the asset transferor, other asset holders can only learn that the identifier information represents an asset object on the blockchain, but cannot learn a specific existing asset indicated by the identifier information. Therefore, anonymously hiding a transferred-out asset object can be achieved.

If the node device determines, by using the zero-knowledge proof, that the identifier information does not correspond to the commitment value of any asset object deposited in the blockchain, or the asset type of the input asset object is different from the asset type of the output asset object in the asset transfer transaction, it indicates that the asset transfer transaction may be an illegal transaction. In this case, the node device can directly discard the asset transfer transaction, and can return a transfer failure prompt message to the asset transferor. For example, the prompt message can be a text prompt such as "The transferred asset does not exist, please confirm" or "The types of the transferred asset are inconsistent, please confirm".

In the previous technical solution, on the one hand, because the asset transfer transaction includes only the commitment value that is generated through calculation by inputting at least the asset type of the output asset object in the asset transfer transaction as input data to the commitment function, and the asset type of the output asset object is not included in the asset transfer transaction in the form of plain text, the blockchain can hide the asset type of an asset object transferred out by the asset transferor, and privacy of the asset transferor can be protected.

On the other hand, because the asset transfer transaction further includes the proof used to perform the zero-knowledge proof on the commitment value, the node device in the blockchain can perform the zero-knowledge proof on the commitment value based on the proof on the premise that the asset type of the asset object transferred out by the asset transferor is hidden, to verify whether the asset type of the input asset object is the same as the asset type of the output asset object in the asset transfer transaction.

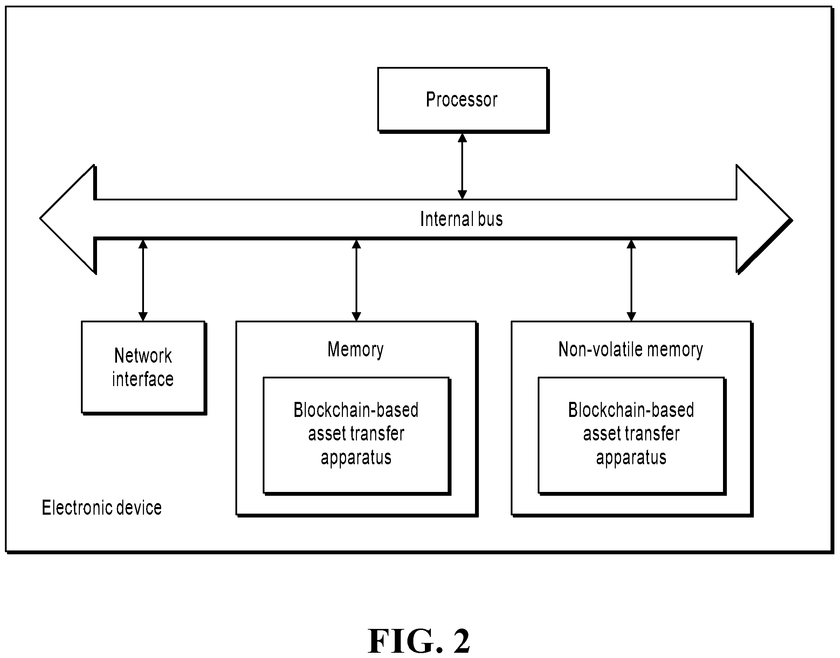

Corresponding to the previous method implementation, the present specification further provides an implementation of a blockchain-based asset transfer apparatus. The implementation of the blockchain-based asset transfer apparatus in the present specification can be applied to an electronic device. The apparatus implementation can be implemented by software, hardware, or a combination of hardware and software. Software implementation is used as an example. As a logical apparatus, the apparatus is formed by reading a corresponding computer program instruction in a non-volatile memory to a memory by a processor of an electronic device where the apparatus is located. In terms of hardware, referring to FIG. 2, FIG. 2 is a structural diagram illustrating hardware of an electronic device where a blockchain-based asset transfer apparatus is located, according to the present specification. In addition to a processor, a memory, a network interface, and a non-volatile memory shown in FIG. 2, the electronic device where the apparatus is located in the implementations can usually include other hardware based on actual functions of the electronic device. Details are omitted here for simplicity.

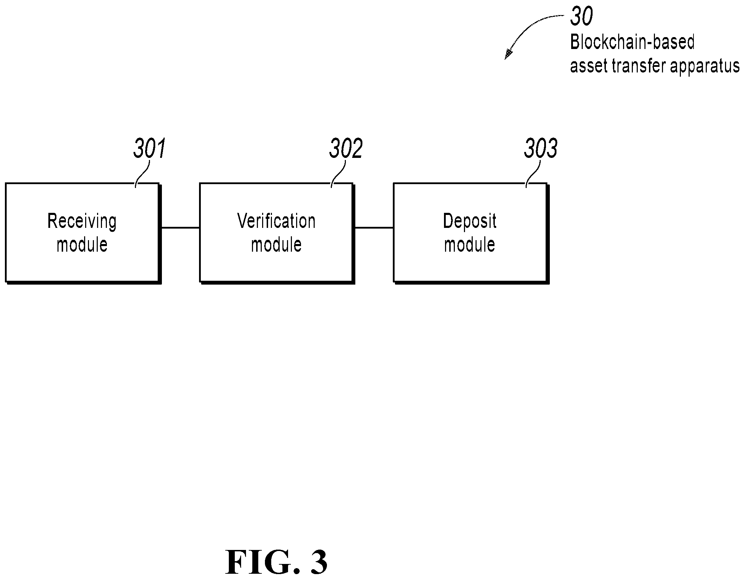

FIG. 3 is a block diagram illustrating a blockchain-based asset transfer apparatus, according to an example implementation of the present specification.

Referring to FIG. 3, a blockchain-based asset transfer apparatus 30 can be applied to the electronic device shown in FIG. 2, and includes a receiving module 301, a verification module 302, and a deposit module 303.

The receiving module 301 is configured to receive an asset transfer transaction sent by an asset transferor. The asset transfer transaction includes a commitment value that is generated through calculation by inputting at least an asset type of an output asset object in the asset transfer transaction as input data to a commitment function, and a proof used to perform a zero-knowledge proof on the commitment value.

The verification module 302 is configured to perform the zero-knowledge proof on the commitment value based on the proof, to verify whether an asset type of an input asset object is the same as the asset type of the output asset object in the asset transfer transaction.

The deposit module 303 is configured to publish the commitment value corresponding to the output asset object on the blockchain for deposit if the asset type of the input asset object is the same as the asset type of the output asset object in the asset transfer transaction.

In the present implementation, the deposit module 303 is configured to publish identifier information corresponding to a commitment value of the input asset object on the blockchain for deposit if the asset type of the input asset object is the same as the asset type of the output asset object in the asset transfer transaction.

In the present implementation, the proof is generated through calculation by the asset transferor by inputting at least the commitment value, the asset type of the input asset object, and the asset type of the output asset object as input data to a proof generation algorithm included in the blockchain.

In the present implementation, the blockchain supports hiding related information of the input asset object, and the input data of the proof generation algorithm includes the commitment value, the asset type of the input asset object, the asset type of the output asset object, and identifier information corresponding to a commitment value of the input asset obj ect.

In the present implementation, the verification module 302 is configured to perform the zero-knowledge proof on the commitment value based on the proof, to verify whether the identifier information corresponds to a commitment value of an asset object deposited in the blockchain, and verify whether the asset type of the input asset object is the same as the asset type of the output asset object in the asset transfer transaction.

In the present implementation, the verification module 302 is configured to input at least the proof and the commitment value as input data of a proof verification algorithm to the proof verification algorithm for calculation; and verify whether the identifier information corresponds to the commitment value of the asset object deposited in the blockchain, and verify whether the asset type of the input asset object is the same as the asset type of the output asset object in the asset transfer transaction, based on the output result of the proof verification algorithm.

In the present implementation, the commitment function is a hash function, and a zero-knowledge proof algorithm included in the blockchain is a zksnark algorithm or a zkstark algorithm.

For an implementation process of functions and roles of various modules in the apparatus, references can be made to an implementation process of corresponding steps in the previous method. Details are omitted here for simplicity.

Because an apparatus implementation basically corresponds to a method implementation, for related parts, references can be made to related descriptions in the method implementation. The previously described apparatus implementation is merely an example. The units described as separate parts may or may not be physically separate, and parts displayed as units may or may not be physical units, may be located in one position, or may be distributed on a plurality of network units. Some or all of the modules can be selected based on actual demands to achieve the objectives of the solutions of the present specification. A person of ordinary skill in the art can understand and implement the implementations of the present specification without creative efforts.

The system, apparatus, modules, or units illustrated in the previous implementations can be implemented by using a computer chip or an entity, or can be implemented by using a product that has a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

Corresponding to the previous method implementation, the present specification further provides an implementation of an electronic device. The electronic device includes a processor and a storage device that is configured to store an instruction that can be executed by a machine. The processor and the storage device are connected to each other by using an internal bus. In another possible implementation, the device may further include an external interface, to communicate with another device or component.

In the present implementation, the processor reads and executes the machine executable instruction that is stored in the storage device and that corresponds to a blockchain-based asset transfer control logic, to receive an asset transfer transaction sent by an asset transferor, where the asset transfer transaction includes a commitment value that is generated through calculation by inputting at least an asset type of an output asset object in the asset transfer transaction as input data to a commitment function, and a proof used to perform a zero-knowledge proof on the commitment value; perform the zero-knowledge proof on the commitment value based on the proof, to verify whether an asset type of an input asset object is the same as the asset type of the output asset object in the asset transfer transaction; and if yes, publish the commitment value corresponding to the output asset object on the blockchain for deposit.

In the present implementation, the processor reads and executes the machine executable instruction that is stored in the storage device and that corresponds to a blockchain-based asset transfer control logic, to publish identifier information corresponding to a commitment value of the input asset object on the blockchain for deposit if the asset type of the input asset object is the same as the asset type of the output asset object in the asset transfer transaction.

In the present implementation, the processor reads and executes the machine executable instruction that is stored in the storage device and that corresponds to a blockchain-based asset transfer control logic, to perform the zero-knowledge proof on the commitment value based on the proof, to verify whether the identifier information corresponds to a commitment value of an asset object deposited in the blockchain, and verify whether the asset type of the input asset object is the same as the asset type of the output asset object in the asset transfer transaction.

In the present implementation, the processor reads and executes the machine executable instruction that is stored in the storage device and that corresponds to a blockchain-based asset transfer control logic, to input at least the proof and the commitment value as input data of a proof verification algorithm to the proof verification algorithm for calculation; and verify whether the identifier information corresponds to the commitment value of the asset object deposited in the blockchain, and verify whether the asset type of the input asset object is the same as the asset type of the output asset object in the asset transfer transaction, based on an output result of the proof verification algorithm.

A person skilled in the art can easily figure out other implementation solutions of the present specification after considering the present specification and practicing the disclosed invention. The present specification is intended to cover any variations, functions, or adaptive changes of the present specification. These variations, functions, or adaptive changes comply with general principles of the present specification and include common knowledge or commonly used technical means in the technical field that are not disclosed in the present specification. The specification and the implementations are merely considered as examples, and the actual scope of the present specification are pointed out by the following claims.

It should be understood that the present specification is not limited to the precise structures that have been described above and shown in the drawings. The scope of the present specification is limited by the appended claims only.

The previous descriptions are merely example implementations of the present specification, and are not intended to limit the present specification.

## Claims

1. A method for transferring an asset based on an asset transfer transaction published in a blockchain, the asset transfer transaction based on an input asset object corresponding to an asset object held by an asset transferor and on an output asset object corresponding to an asset object to be re-created for an asset transferee, the input asset object having an asset type and the output asset object having an asset type, the blockchain supporting hiding related information of the input asset object, the method comprising:
receiving (102), by a node device of the blockchain, the asset transfer transaction sent by the asset transferor, wherein the asset transfer transaction comprises a commitment value corresponding to the output asset object and a proof used to perform a zero-knowledge proof on the commitment value, wherein the commitment value corresponding to the output asset object is generated through calculation by inputting the output asset object and the asset type of the output asset obj ect in the asset transfer transaction as input data to a commitment function, wherein the proof is generated through calculation by the asset transferor by inputting at least the commitment value corresponding to the output asset object, the asset type of the input asset object, the asset type of the output asset object, and *identifier information corresponding to a commitment value of the input asset object* as input data to a proof generation algorithm comprised in the blockchain, wherein the identifier information corresponding to the commitment value of the input asset object uniquely identifies the commitment value of the input asset object;
performing (104), by the node device invoking a smart contract published on the blockchain, the zero-knowledge proof on the commitment value based on the proof, wherein execution code related to an algorithm logic of the zero-knowledge proof is implemented in the smart contract;
verifying, by the node device invoking the smart contract, whether the asset type of the input asset object matches the asset type of the output asset object in the asset transfer transaction; and
in response to determining that the asset type of the input asset object is different from the asset type of the output asset object in the asset transfer transaction, discarding the asset transfer transaction, and
in response to verifying that the asset type of the input asset object matches the asset type of the output asset object in the asset transfer transaction, publishing (106), by the node device, the commitment value corresponding to the output asset object on the blockchain for deposit to complete the transfer of the asset.

2. The method according to claim 1, further comprising:
in response to verifying that the asset type of the input asset object matches the asset type of the output asset object in the asset transfer transaction, publishing the identifier information corresponding to the commitment value of the input asset object on the blockchain for deposit.

3. The method according to claim 1, wherein performing (104) the zero-knowledge proof on the commitment value based on the proof, to verify whether the asset type of the input asset object matches the asset type of the output asset object in the asset transfer transaction comprises:
performing, by the node device, the zero-knowledge proof on the commitment value based on the proof, to verify whether the identifier information corresponds to the commitment value of an asset object deposited in the blockchain, and to verify whether the asset type of the input asset object matches the asset type of the output asset object in the asset transfer transaction.

4. The method according to claim 3, wherein performing (104) the zero-knowledge proof on the commitment value based on the proof, to verify whether the asset type of the input asset object matches the asset type of the output asset object in the asset transfer transaction comprises:
inputting at least the proof and the commitment value as input data of a proof verification algorithm to the proof verification algorithm for calculation; and
verifying whether the identifier information corresponds to the commitment value of the asset object deposited in the blockchain, and verifying whether the asset type of the input asset object matches the asset type of the output asset object in the asset transfer transaction, based on an output result of the proof verification algorithm.

5. The method according to claim 1, wherein the commitment function is a hash function.

6. The method according to claim 1, wherein the zero-knowledge proof is based on an algorithm comprising a zksnark algorithm or a zkstark algorithm.

7. The method according to claim 1, wherein the blockchain comprises a consortium blockchain, a private chain, or a public chain.

8. The method according to claim 1, wherein the blockchain comprises a key generation algorithm.

9. The method according to claim 1, further comprising:
receiving a public key of an asset receiver.

10. The method according to any one of claims 1 to 9, wherein a particular asset type can be created by publishing a corresponding smart contract in the blockchain.

11. The method according to claim 10, wherein an asset object of the particular asset type can be created in the blockchain by invoking the corresponding smart contract.

12. An apparatus (30) for transferring an asset, the apparatus comprising a plurality of modules (301, 302, 303) configured to perform the method of any one of claims 1 to 11.

## Patentansprüche

1. Verfahren zum Übertragen eines Assets basierend auf einer in einer Blockchain veröffentlichten Asset-Übertragungstransaktion, wobei die Asset-Übertragungstransaktion auf einem Eingabe-Asset-Objekt basiert, das einem Asset-Objekt entspricht, das von einem Asset-Übertragenden gehalten wird, und auf einem Ausgabe-Asset-Objekt, das einem Asset-Objekt entspricht, das für einen Asset-Übernehmer neu erstellt werden soll, wobei das Eingabe-Asset-Objekt einen Asset-Typ hat und das Ausgabe-Asset-Objekt einen Asset-Typ hat, wobei die Blockchain das Verbergen von verwandten Informationen des Eingabe-Asset-Objekts unterstützt, wobei das Verfahren umfasst:
Empfangen (102) der vom Asset-Übertragenden gesendeten Asset-Übertragungstransaktion durch eine Knotenvorrichtung des Knotens der Blockchain, wobei die Asset-Übertragungstransaktion einen Verpflichtungswert, der dem Ausgabe-Asset-Objekt entspricht, und einen Beweis umfasst, der verwendet wird, um einen Null-Wissen-Beweis für den Verpflichtungswert durchzuführen, wobei der Verpflichtungswert, der dem Ausgabe-Asset-Objekt entspricht, durch Berechnung durch Eingeben des Ausgabe-Asset-Objekts und des Asset-Typs des Ausgabe-Asset-Objekts in der Asset-Übertragungstransaktion als Eingabedaten für eine Verpflichtungsfunktion erzeugt wird, wobei der Beweis durch Berechnung durch den Asset-Übertragenden durch Eingeben mindestens des dem Ausgabe-Asset-Objekt entsprechenden Verpflichtungswertes, des Asset-Typs des Eingabe-Asset-Objekts, des Asset-Typs des Ausgabe-Asset-Objekts und von einem Verpflichtungswert des Eingabe-Asset-Objekts entsprechenden Identifikatorinformationen als Eingabedaten in einen in der Blockchain umfassten Algorithmus zum Erzeugen eines Beweises erzeugt wird, wobei die dem Verpflichtungswert des Eingabe-Asset-Objekts entsprechenden Identifikatorinformationen den Verpflichtungswert des Eingabe-Asset-Objekts eindeutig identifizieren;
Durchführen (104), durch die Knotenvorrichtung, die einen auf der Blockchain veröffentlichten Smart Contract aufruft, des Null-Wissen-Beweises für den Verpflichtungswert basierend auf dem Beweis, wobei Ausführungscode, der sich auf eine Algorithmuslogik des Null-Wissen-Beweises bezieht, in dem Smart Contract implementiert ist;
Verifizieren, durch die den Smart Contract aufrufende Knotenvorrichtung, ob der Asset-Typ des eingegebenen Asset-Objekts mit dem Asset-Typ des ausgegebenen Asset-Objekts in der Asset-Übertragungstransaktion übereinstimmt; und
als Reaktion auf das Bestimmen, dass der Asset-Typ des Eingabe-Asset-Objekts sich von dem Asset-Typ des Ausgabe-Asset-Objekts in der Asset-Übertragungstransaktion unterscheidet, Verwerfen der Asset-Übertragungstransaktion, und
als Reaktion auf das Verifizieren, dass der Asset-Typ des Eingabe-Asset-Objekts mit dem Asset-Typ des Ausgabe-Asset-Objekts in der Asset-Übertragungstransaktion übereinstimmt, Veröffentlichen (106) des Verpflichtungswertes, der dem Ausgabe-Asset-Objekt entspricht, durch die Knotenvorrichtung, auf der Blockchain zur Hinterlegung, um die Übertragung des Assets abzuschließen.

2. Verfahren nach Anspruch 1, ferner umfassend:
als Reaktion auf das Verifizieren, dass der Asset-Typ des Eingabe-Asset-Objekts mit dem Asset-Typ des Ausgabe-Asset-Objekts in der Asset-Übertragungstransaktion übereinstimmt, Veröffentlichen der Identifikatorinformationen, die dem Verpflichtungswert des Eingabe-Asset-Objekts entsprechen, in der Blockchain zur Hinterlegung.

3. Verfahren nach Anspruch 1, wobei das Durchführen (104) des Null-Wissen-Beweises auf dem Verpflichtungswert basierend auf dem Beweis, um zu überprüfen, ob der Asset-Typ des Eingabe-Asset-Objekts mit dem Asset-Typ des Ausgabe-Asset-Objekts in der Asset-Übertragungstransaktion übereinstimmt, umfasst:
Durchführen, durch die Knotenvorrichtung, des Null-Wissen-Beweises auf dem Verpflichtungswert basierend auf dem Beweis, um zu verifizieren, ob die Identifikatorinformationen dem Verpflichtungswert eines Asset-Objekts entsprechen, das in der Blockchain hinterlegt ist, und um zu verifizieren, ob der Asset-Typ des Eingabe-Asset-Objekts mit dem Asset-Typ des Ausgabe-Asset-Objekts in der Asset-Übertragungstransaktion übereinstimmt.

4. Verfahren nach Anspruch 3, wobei das Durchführen (104) des Null-Wissen-Beweises auf dem Verpflichtungswert basierend auf dem Beweis, um zu überprüfen, ob der Asset-Typ des Eingabe-Asset-Objekts mit dem Asset-Typ des Ausgabe-Asset-Objekts in der Asset-Übertragungstransaktion übereinstimmt, umfasst:
Eingeben zumindest des Beweises und des Verpflichtungswertes als Eingabedaten eines Beweisverifikationsalgorithmus in den Beweisverifikationsalgorithmus zur Berechnung; und
Verifizieren, ob die Identifikatorinformationen mit dem Verpflichtungswert des in der Blockchain hinterlegten Asset-Objekts übereinstimmen, und Verifizieren, ob der Asset-Typ des Eingabe-Asset-Objekts mit dem Asset-Typ des Ausgabe-Asset-Objekts in der Asset-Übertragungstransaktion übereinstimmt, basierend auf einem Ausgabeergebnis des Beweisverifizierungsalgorithmus.

5. Verfahren nach Anspruch 1, wobei die Verpflichtungsfunktion eine Hash-Funktion ist.

6. Verfahren nach Anspruch 1, wobei der Null-Wissen-Beweis auf einem Algorithmus basiert, der einen zksnark-Algorithmus oder einen zkstark-Algorithmus umfasst.

7. Verfahren nach Anspruch 1, wobei die Blockchain eine Konsortialblockchain, eine private Chain oder eine öffentliche Chain umfasst.

8. Verfahren nach Anspruch 1, wobei die Blockchain einen Schlüsselerzeugungsalgorithmus umfasst.

9. Verfahren nach Anspruch 1, ferner umfassend:
Empfangen eines öffentlichen Schlüssels eines Asset-Empfängers.

10. Verfahren nach einem der Ansprüche 1 bis 9, wobei ein spezieller Asset-Typ durch Veröffentlichen eines entsprechenden Smart Contracts in der Blockchain erstellt werden kann.

11. Verfahren nach Anspruch 10, wobei ein Asset-Objekt des speziellen Asset-Typs in der Blockchain durch Aufrufen des entsprechenden Smart Contracts erstellt werden kann.

12. Vorrichtung (30) zum Übertragen eines Assets, wobei die Vorrichtung eine Mehrzahl von Modulen (301, 302, 303) umfasst, die dazu ausgelegt sind, das Verfahren nach einem der Ansprüche 1 bis 11 durchzuführen.

## Revendications

1. Procédé de transfert d'un actif basé sur une transaction de transfert d'actif publiée dans une chaîne de blocs, la transaction de transfert d'actif étant basée sur un objet d'actif d'entrée correspondant à un objet d'actif détenu par un cédant d'actif et sur un objet d'actif de sortie correspondant à un objet d'actif à recréer pour un cessionnaire d'actif, l'objet d'actif d'entrée ayant un type d'actif et l'objet d'actif de sortie ayant un type d'actif, la chaîne de blocs prenant en charge des informations de masquage de l'objet d'actif d'entrée, le procédé comprenant :
la réception (102), par un dispositif de noeud de la chaîne de blocs, de la transaction de transfert d'actif envoyée par le cédant d'actif, dans lequel la transaction de transfert d'actif comprend une valeur d'engagement correspondant à l'objet d'actif de sortie et une preuve utilisée pour réaliser une preuve à connaissance nulle sur la valeur d'engagement, dans lequel la valeur d'engagement correspondant à l'objet d'actif de sortie est générée par calcul en entrant l'objet d'actif de sortie et le type d'actif de l'objet d'actif de sortie dans la transaction de transfert d'actif en tant que données d'entrée dans une fonction d'engagement, dans lequel la preuve est générée par calcul par le cédant d'actif en entrant au moins la valeur d'engagement correspondant à l'objet d'actif de sortie, le type d'actif de l'objet d'actif d'entrée, le type d'actif de l'objet d'actif de sortie et des informations d'identifiant correspondant à une valeur d'engagement de l'objet d'actif d'entrée en tant que données d'entrée dans un algorithme de génération de preuve compris dans la chaîne de blocs, dans lequel les informations d'identifiant correspondant à la valeur d'engagement de l'objet d'actif d'entrée identifient de manière unique la valeur d'engagement de l'objet d'actif d'entrée ;
la réalisation (104), par le dispositif de noeud appelant un contrat intelligent publié sur la chaîne de blocs, de la preuve à connaissance nulle sur la valeur d'engagement en fonction de la preuve, dans lequel un code d'exécution lié à une logique algorithmique de la preuve à connaissance nulle est implémenté dans le contrat intelligent ;
la vérification, par le dispositif de noeud appelant le contrat intelligent, si le type d'actif de l'objet d'actif d'entrée correspond ou non au type d'actif de l'objet d'actif de sortie dans la transaction de transfert d'actif ; et
en réponse à la détermination que le type d'actif de l'objet d'actif d'entrée est différent du type d'actif de l'objet d'actif de sortie dans la transaction de transfert d'actif, l'annulation de la transaction de transfert d'actif, et
en réponse à la vérification que le type d'actif de l'objet d'actif d'entrée correspond au type d'actif de l'objet d'actif de sortie dans la transaction de transfert d'actif, la publication (106), par le dispositif de noeud, de la valeur d'engagement correspondant à l'objet d'actif de sortie sur la chaîne de blocs en vue d'un dépôt afin d'achever le transfert de l'actif.

2. Procédé selon la revendication 1, comprenant en outre :
en réponse à la vérification que le type d'actif de l'objet d'actif d'entrée correspond au type d'actif de l'objet d'actif de sortie dans la transaction de transfert d'actif, la publication des informations d'identifiant correspondant à la valeur d'engagement de l'objet d'actif d'entrée sur la chaîne de blocs en vue d'un dépôt.

3. Procédé selon la revendication 1, dans lequel la réalisation (104) de la preuve à connaissance nulle sur la valeur d'engagement en fonction de la preuve, pour vérifier si le type d'actif de l'objet d'actif d'entrée correspond ou non au type d'actif de l'objet d'actif de sortie dans la transaction de transfert d'actif comprend :
la réalisation, par le dispositif de noeud, de la preuve à connaissance nulle sur la valeur d'engagement en fonction de la preuve, pour vérifier si les informations d'identifiant correspondent ou non à la valeur d'engagement d'un objet d'actif déposé dans la chaîne de blocs et vérifier si le type d'actif de l'objet d'actif d'entrée correspond ou non au type d'actif de l'objet d'actif de sortie dans la transaction de transfert d'actif.

4. Procédé selon la revendication 3, dans lequel la réalisation (104) de la preuve à connaissance nulle sur la valeur d'engagement en fonction de la preuve, pour vérifier si le type d'actif de l'objet d'actif d'entrée correspond ou non au type d'actif de l'objet d'actif de sortie dans la transaction de transfert d'actif comprend :
l'entrée au moins de la preuve et de la valeur d'engagement en tant que données d'entrée d'un algorithme de vérification de preuve dans l'algorithme de vérification de preuve en vue d'un calcul ; et
la vérification si les informations d'identifiant correspondent ou non à la valeur d'engagement de l'objet d'actif déposé dans la chaîne de blocs, et la vérification si le type d'actif de l'objet d'actif d'entrée correspond ou non au type d'actif de l'objet d'actif de sortie dans la transaction de transfert d'actif, en fonction d'un résultat de sortie de l'algorithme de vérification de preuve.

5. Procédé selon la revendication 1, dans lequel la fonction d'engagement est une fonction de hachage.

6. Procédé selon la revendication 1, dans lequel la preuve à connaissance nulle est basée sur un algorithme comprenant un algorithme zksnark ou un algorithme zkstark.

7. Procédé selon la revendication 1, dans lequel la chaîne de blocs comprend une chaîne de blocs de consortium, une chaîne privée, ou une chaîne publique.

8. Procédé selon la revendication 1, dans lequel la chaîne de blocs comprend un algorithme de génération de clé.

9. Procédé selon la revendication 1, comprenant en outre :
la réception d'une clé publique à partir d'un récepteur d'actif.

10. Procédé selon l'une quelconque des revendications 1 à 9, dans lequel un type d'actif particulier peut être créé en publiant un contrat intelligent correspondant dans la chaîne de blocs.

11. Procédé selon la revendication 10, dans lequel un objet d'actif du type d'actif particulier peut être créé dans la chaîne de blocs en appelant le contrat intelligent correspondant.

12. Appareil (30) de transfert d'un actif, l'appareil comprenant une pluralité de modules (301, 302, 303) configurés pour réaliser le procédé selon l'une quelconque des revendications 1 à 11.
